**Europäisches Patentamt**

**European Patent Office**

**Office européen des brevets**

(11) Veröffentlichungsnummer: **0 060 512 A1**

# (12) EUROPÄISCHE PATENTANMELDUNG

(21) Anmeldenummer: 82101927.0

(22) Anmeldetag: 11.03.82

(51) Int. Cl.³: **B 62 J 5/00, H 02 J 9/06**

(30) Priorität: 16.03.81 DE 3110122
19.11.81 DE 3145775
28.01.82 DE 3202681

(43) Veröffentlichungstag der Anmeldung: 22.09.82
Patentblatt 82/38

(84) Benannte Vertragsstaaten: AT BE CH FR GB IT LI LU NL SE

(71) Anmelder: **HELMUT HUND K.G.**, Postfach 29 Wetzlarer Strasse 145, D-6330 Wetzlar-Nauborn (DE)

(72) Erfinder: **Briem, Alfred, Ing. (grad.)**, Ulmenweg 14, D-6336 Solms-Niederbiel (DE)
Erfinder: **Troussas, Joannis, Dipl. Ing.**, Dreieichenweg 17, D-6333 Braunfels-Bonbaden (DE)

(74) Vertreter: **Riecke, Manfred**, Neuköllner Strasse 8, D-6333 Braunfels (DE)

(54) Notstromversorgungsschaltung für einen dynamogespeisten Verbraucher.

(57) Es wird eine elektrische Schaltung zur kurzzeitigen Stromversorgung eines dynamogespeisten Verbrauchers bei Dynamoausfall beschrieben. Der Verbraucher liegt einerseits im Dynamostromkreis und andererseits in einem Notstromkreis, der jedoch bei normalem Dynamobetrieb durch ein Halbleiterschaltglied gesperrt ist. Das Halbleiterschaltglied wird von der Kombination eines grossen und eines kleinen Kondensators gesteuert, die mit ihren Polaritäten über einen hochohmigen Widerstand antiparallel zusammengeschaltet sind, wobei normalerweise der kleine Kondensator mit seinem negativen Pol an der Steuerelektrode des Halbleiterschaltgliedes liegt und dieses sperrt. Bei Dynamoausfall entlädt sich der grosse Kondensator über die Steuerelektrode des Halbleiterschaltgliedes, so dass letzteres für die Dauer der Kondensatorentladung durchschaltet und den Verbraucher mit der Notstromquelle verbindet. Nach Ablauf der Kondensatorentladung fällt die Spannung an der Steuerelektrode des Halbleiterschaltgliedes wieder unter den Schwellenwert des Schaltgliedes und der Strom aus der Notstromquelle zum Verbraucher wird automatisch unterbrochen. Die Schaltung enthält eine direkte Verbindung vom Dynamo zur Notstromquelle über eine Diode, so dass eine Aufladung der Stromquelle stattfindet, wenn als solche Stromquelle ein Akku verwendet wird. Wenn die Notstromschaltung bei einem Fahrrad verwendet wird, wird die Unterbringung im Sattelrohr des Fahrrades vorgeschlagen.

0060512

Die Erfindung betrifft eine elektrische Schaltung zur mindestens kurzzeitigen Versorgung eines dynamogespeisten Verbrauchers aus einer Notstromquelle bei Dynamoausfall. Insbesondere betrifft die Erfindung eine Notbeleuchtung für Fahrräder und ähnliche Fahrzeuge mit einer von einem Dynamo gespeisten Beleuchtungsanlage.

Wesentliches Merkmal der Beleuchtung derartiger Fahrzeuge ist es, daß der Strom für diese Beleuchtung mittels eines Dynamos aus der Bewegungsenergie des Fahrzeuges gewonnen wird. Dies hat zur Folge, daß die Beleuchtung immer dann ausfällt, wenn das Fahrzeug still steht. Dieser Umstand kann besonders bei Fahrradbenutzern zu erheblicher Gefährdung im Verkehr führen, nämlich immer dann, wenn bei einem verkehrsbedingten Anhalten, z.B. an einer Kreuzung, sowohl der Scheinwerfer als auch das Rücklicht des Fahrrades dunkel werden und damit der Radfahrer für die übrigen Verkehrsteilnehmer - insbesondere an schlecht beleuchteten Kreuzungen und Straßeneinmündungen - nur noch schwer oder gar nicht mehr erkennbar ist.

Es sind daher schon Beleuchtungen für Fahrräder und ähnliche Fahrzeuge bekannt geworden bei denen die Beleuchtungsanlage außer von einem Dynamo auch von einer Notstromquelle gespeist wird, und zwar dergestalt, daß die Anlage während der Bewegung des Fahrzeuges den Strom ausschließlich aus dem Dynamo bezieht, während bei Fahrzeugstillstand die Anlage von der Notstromquelle gespeist wird. Diese bekannten Notbeleuchtungen sind in ihrer elektrischen Schaltung jedoch sehr aufwendig und demzufolge relativ teuer.

Außerdem benötigt eine solche Notbeleuchtung aber auch Schaltmittel, welche die Notbeleuchtung nach einer vorgegebenen Zeit wieder abschalten. Sonst könnte es vorkommen, daß sich am Ende einer Fahrt bei Stillstand des Fahrrades, die Notbeleuchtung einschaltet und bis zur Erschöpfung der Notstromquelle weiterbrennt. Solche Schaltmittel könnten im einfachsten Fall ein manueller Schalter sein, bei dem aber die Gefahr besteht, daß vergessen wird, ihn zu betätigen. Es ist daher bereits eine Schaltung dieser Art bekannt geworden, die einen Zeitschalter enthält, der die Speisung durch die Notstromquelle nach einer gewissen Zeit automatisch abschaltet. Aber auch diese bekannte Schaltung ist aufwendig und teuer und arbeitet mit einem Relais, d.h. mit mechanischen Schaltern, die bekanntermaßen bei häufigem Gebrauch störanfällig sind.

Der Erfindung liegt die Aufgabe zugrunde, eine Schaltung für solche Notbeleuchtungen anzugeben, die im Aufbau einfacher und demzufolge in der Herstellung billiger ist, als die bekannten Schaltungen, und die eine automatische Zeitschaltung besitzt, die ohne mechanische Kontakte auskommt.

Gemäß der Erfindung ist diese Aufgabe durch eine Schaltung gelöst, die die in den Ansprüchen angegebenen Merkmale aufweist.

Der Stromkreis der Notstromquelle läuft in bekannter Weise über ein Halgleiterschaltglied. Die Steuerelektrode des Halbleiterschaltgliedes ist mit dem negativen Pol eines ersten Kondensators geringer Kapazität verbunden, der bei Dynamobetrieb vom Dynamo in aufgeladenem Zustand gehalten wird und dabei das Halbleiterschaltglied sperrt.

Dem ersten Kondensator ist ein zweiter Kondensator großer Kapazität in der Polarität antiparallel geschaltet, der ebenfalls bei Dynamobetrieb vom Dynamo in aufgeladenem Zustand gehalten wird, und der mit seinem Pluspol mit dem Minuspol des ersten Kondensators über einen hochohmigen Widerstand verbunden ist.

Der Hauptgedanke der Erfindung besteht in der Parallelschaltung eines großen und eines kleinen Kondensators

- 4 -

0060512

mit umgekehrten Polaritäten, d.h. im Zusammenwirken zweier gegensätzlicher Kondensatorladungen, die von der Dynamowechselspannung gesteuert werden und mit deren resultierender Spannung die Steuerelektrode des Halbleiterschaltgliedes angesteuert wird.

Mit dieser einfachen Schaltung werden drei unterschiedliche Schaltbedingungen mit nur einem Halbleiterschaltglied verwirklicht, nämlich:

a) die Vorbereitung einer Zeiteinschaltung für die Notstromversorgung, wenn der Dynamo einmal gelaufen hat,

b) die Verhinderung der Notstromversorgung und damit des Zeitablaufes, solange der Dynamo noch läuft, aber Umschaltung auf Notstromversorgung und Beginn des Zeitablaufes sobald der Dynamo steht,

c) sofortige Unterbrechung des Notstromkreises, wenn sich der Dynamo wieder dreht, bei gleichzeitiger Neuvorbereitung der Zeitschaltung.

Zur Verwirklichung dieser Schaltfunktionen werden normalerweise mindestens ein UND-Gatter mit zwei Eingängen oder zwei Steuertransistoren mit zugehörigen Zeit- und Siebgliedern (2 RC-Kombinationen) zur Ansteuerung benötigt. Im Gegensatz dazu kommt die erfundene Schaltung mit einem Minimum von gängigen, billigen Bauelementen aus und ist daher in der Herstellung wesentlich billiger als die Schaltungen nach dem Stand der Technik.

Die konkrete Ausbildung des Halbleiterschaltgliedes liegt im Fachwissen des Durchschnittsfachmannes auf dem Gebiet der elektronischen Schaltungen. Nur beispielsweise sei daher erwähnt, daß ein solches Halbleiterschaltglied aus einem Transistor mit Darlington-Transistor bestehen kann, oder auch aus nur einem Darlington-Transistor mit hoher Verstärkung. Auch wäre es denkbar, das Halbleiterschaltglied aus drei diskreten Transistoren aufzubauen, oder aus nur einem Leistungs-Feldeffekttransistor.

Als Notstromquelle können in an sich bekannter Weise Batterien verwendet werden. Dies hat jedoch den Nachteil, daß die Batterien sich nach und nach erschöpfen und gewechselt werden müssen. In weiterer Ausgestaltung der Erfindung wird daher vorgeschlagen, als Notstromquelle einen Akkumulator zu verwenden und die Schaltung mit einem direkten Zweig zwischen Dynamo und Akku zu versehen, in dem eine Diode liegt, über welche die Spitzenspannung der einen Dynamohalbwelle zum Akku verläuft.

Damit enthält die erfundene Notstromversorgungsschaltung eine wiederaufladbare Stromquelle, deren Wiederaufladung automatisch geschieht, und die nicht mehr ausgewechselt zu werden braucht.

0060512

Die Wiederaufladung geschieht mit den Spitzen der Dynamospannung. Z.B. möge die effektive Dynamospannung 6 V betragen, die zum Betrieb der Beleuchtung erforderlich ist. Die Maxiamlspannung ist dann in der Spitze in jeder Halbwelle etwas höher, bricht aber zusammen und läßt dabei über die Diode einen Ladestrom in den Akku fließen, der dessen Wiederaufladung bewirkt.

Wenn, wie außerdem noch vorgeschlagen wird, die Schaltung derart eingerichtet ist, daß als Notstromquelle wahlweise entweder Batterien oder ein Akku verwendet werden kann, so fließt dieser Ladestrom auch bei Batteriebetrieb. Dies ist keineswegs schädlich sondern führt ebenfalls zu einer Regenerierung der Batterien, allerdings nur in begrenztem Ausmaß.

Die Anbringung der erfundenen Schaltung am Fahrzeug stellt eine schwierige Aufgabe dar. Da beabsichtigt ist, als Notstromquelle wahlweise Batterien oder einen Akku zu verwenden und als Batterien vorzugsweise runde Babyzellen benutzt werden, wird vorgeschlagen, den Akku ebenfalls rund auszubilden und die Schaltungselemente und die Notstromquelle in einem rohrförmigen Gehäuse unterzubringen, in das dann wahlweise der Akku oder die Batterien eingesetzt werden können. Das Gehäuse kann dann zusätzlich am Fahrzeug angebracht werden.

0060512

Außen am Fahrzeug ist die Schaltung jedoch dem Zugriff Dritter preisgegeben und z.B. gegen Diebstahl keineswegs gesichert. Sofern die Schaltung zur Verwendung an einem Fahrrad bestimmt ist, wird daher vorgeschlagen, als rohrförmiges Gehäuse das Sattelrohr des Fahrrades zu benutzen. Diese Sattelrohre sind im Durchmesser abgesetzt; sie haben ein oberes Ende mit dünnerem Durchmesser, auf wleches der Sattel aufgesetzt und festgeschraubt wird, und sie haben ein unteres dickeres Ende, das in den Fahrradrahmen gesteckt und dort festgeklemmt wird. Die Durchmesser der beiden Teile sind genormt.

Gemäß der Erfindung wird nun vorgeschlagen, die gesamte Notstromversorgungsschaltung in dem Sattelrohr unterzubringen, und zwar die Schaltungselemente in dem dünneren oberen Teil und den Akku bzw. die Batterien in dem unteren dickeren Teil. In dieser Anordnung sind die Schaltungselemente weitgehend gegen Diebstahl geschützt. Trotzdem ist das Sattelrohr mit dem entsprechenden Werkzeug auswechselbar. Daher kann ein Fahrrad leicht mit einer Notstromversorgungsschaltung nachgerüstet werden, es braucht nur das vorbereitete Sattelrohr ausgetauscht zu werden, wobei - als besonderer Vorteil - das äußere Erscheinungsbild des Fahrrades in keiner Weise geändert wird.

In der Zeichnung ist die Erfindung in einem Ausführungsbeispiel dargestellt. Es zeigen:

Fig. 1    schematisch ein Bild der erfundenen Schaltung in
          einer ersten Ausführungsform,

Fig. 2    schematisch ein Bild der erfundenen Schaltung in
          einer zweiten Ausführungsform,

Fig. 3    schematisch ein Beispiel für den inneren Aufbau
          eines in der erfundenen Schaltung verwendeten
          Halbleiterschaltgliedes, und

Fig. 4    die räumliche Unterbringung der Notstromversorgungsschaltung an einem Fahrrad.

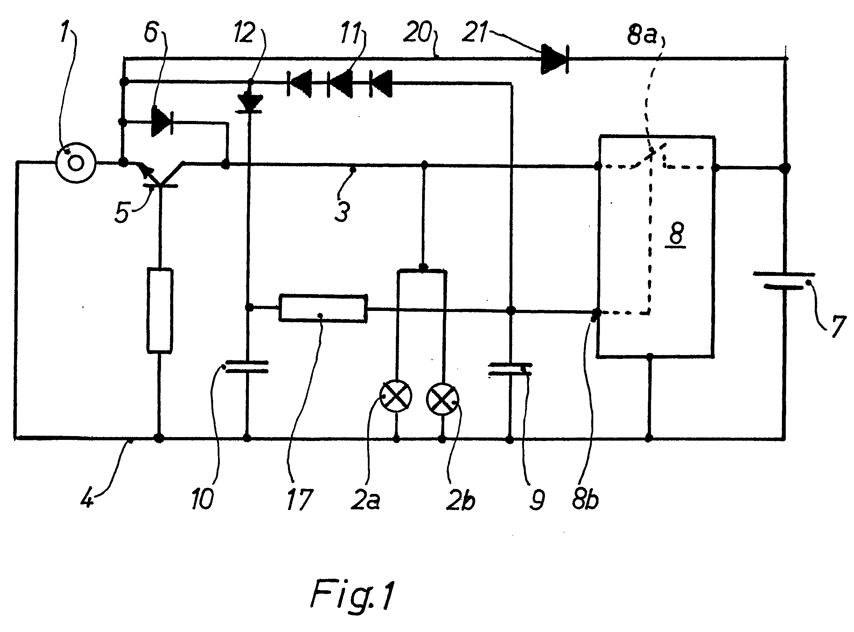

In der Fig.1 ist mit 1 ein Dynamo bezeichnet, der die
normale Stromquelle für eine Beleuchtungsanlage 2a;2b
bildet. Der Stromkreis verläuft vom Dynamo über eine
Leitung 3 zur Beleuchtungsanlage 2a;2b und über eine
Masse, dargestellt durch eine Leitung 4, zurück zum Dynamo.

Im Ausführungsbeispiel der Fig.1 ist in der Leitung 3 ein
Schalttransistor 5 und dazu parallel eine Diode 6 geschaltet, die in bekannter Weise dazu dienen, die beiden
Halbwellen des Dynamostromes zur Beleuchtungsanlage
durchzulassen.

Diese Baugruppe ist jedoch mit Nachteilen behaftet.
Vor allem tritt an ihr ein relativ hoher Spannungsabfall
auf; außerdem ist dieses Bauteil relativ teuer.

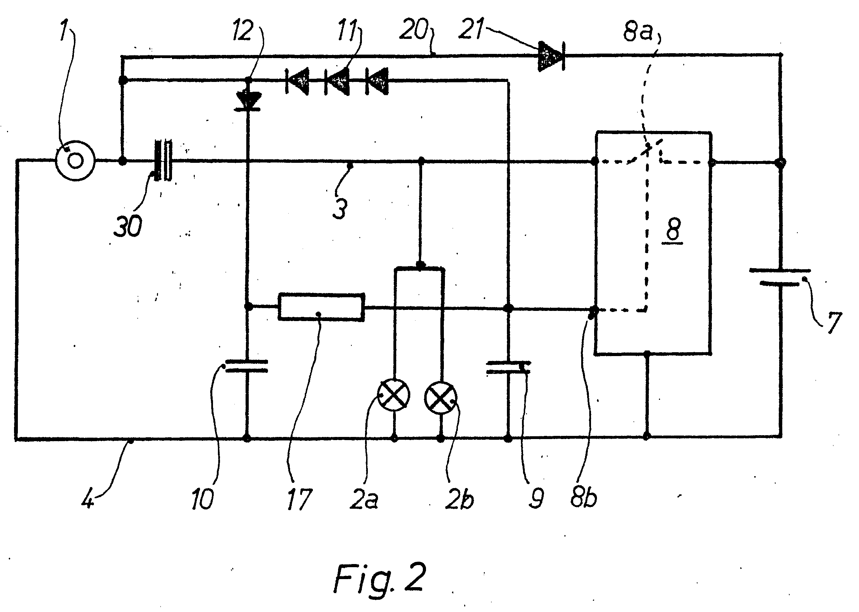

In der in Fig.2 dargestellten zweiten Ausführungsform der Erfindung ist aus diesem Grunde in der Leitung zwischen dem Dynamo und der Beleuchtungsanlage ein Kondensator 30 eingesetzt, der die beiden Halbwellen des Dynamostromes bei nur geringem Spannungsabfall zur Beleuchtungsanlage durchläßt, aber in umgekehrter Richtung den Fluß des Batteriestromes zum Dynamo 1 sperrt und den Strom zur Beleuchtungsanlage 2a;2b durchläßt.

Außerdem ist für die Beleuchtungsanlage 2a;2b noch ein Notstromkreis vorgesehen, der von einer Notstromquelle 7 über ein Halbleiterschaltglied 8 zur Beleuchtungsanlage und von dort über die Masseleitung 4 zurück zur Stromquelle 7 verläuft. Dieses Halbleiterschaltglied, das in bekannter Weise einen elektronischen Schalter darstellt, der in der Fig.1 schematisch mit 8a bezeichnet ist, könnte aber durchaus auch in der Verbindung zwischen der Stromquelle 7 und der Masseleitung 4 eingefügt sein.

Bei normalem Dynamobetrieb ist das Halbleiterschaltglied 8 gesperrt, so daß die Stromversorgung der Beleuchtunsanlage 2a;2b ausschließlich vom Dynamo 1 erfolgt. Für die Steuerung des Halbleiterschaltgliedes 8 über eine Steuerelektrode 8b ist eine Kombination aus einem ersten Kondensator geringer Kapazität 9 und einem zweiten Kondensator hoher Kapazität 10 vorgesehen. Die Kondensatoren sind mit ihren Polaritäten antiparallel geschaltet, wobei normalerweise der negative Pol des ersten Kondensators 9 mit der Steuerelektrode 8b des Halbleiterschaltgliedes 8 verbunden ist.

Beide Kondensatoren werden vom Dynamo bei dessen Betrieb aufgeladen, und zwar wird der erste Kondensator 9 über eine Reihenschaltung gleichgerichteter Dioden 11 geladen, während der zweite Kondensator über eine Diode 12 geladen wird.

Diese vorstehend beschriebene Schaltung funktioniert wie folgt:

Bei Dynamobetrieb wird vom Dynamo 1 eine Wechselspannung geliefert. Über die Kollektor/Emitter-Strecke des Transistors 5 und die dazu antiparallele Diode 6 fließt dabei in beiden Halbwellen der volle Strom zur Beleuchtungsanlage 2a;2b.

Bei dieser Betriebsart darf kein Strom aus der Stromquelle 7 fließen, um diese nicht unnötig zu entladen. Zu diesem Zweck muß das Halbleiterschaltglied 8 gesperrt sein.

Dies wird durch die kombinierten Kondensatoren 9 und 10 erreicht. Beim Dynamobetrieb wird sofort über die Dioden 11 der erste Kondensator 9 mit seiner geringeren Kapazität auf ein der Masse gegenüber negatives Potential aufgeladen.

Gleichzeitig wird aber auch der zweite Kondensator 10 mit seiner großen Kapazität auf einen positiven Spannungswert aufgeladen, der über einen hochohmigen Widerstand 17 auf den negativen Pol des Kondensators 9 und die Steuerelektrode 8b des Halbleiterschaltgliedes 8 einwirkt.

Der Spannungswert des ersten Kondensators 9 und der vom zweiten, großen Kondensator 10 gelieferte Spannungswert addieren sich über den hochohmigen Widerstand 17 bei geeigneter Dimensionierung der Bauteile zu einer resultierenden Spannung in der Weise, daß bei Dynamobetrieb immer eine leicht negative Spannung an der Steuerelektrode des Halbleiterschaltgliedes liegt und damit der Batteriestromkreis sicher abgeschaltet ist.

Der Notstrombetrieb wird durch den Ausfall des Dynamos 1 eingeleitet. Bei Stillstand des Dynamos wird der erste Kondensator 9 nicht mehr neu negativ aufgeladen. Gleichzeitig bewirkt jedoch die im großen Kondensator 10 gespeicherte Ladung, daß über den hochohmigen Widerstand 17 der erste Kondensator 9 sehr bald auf ein positives Spannungspotential gegenüber der Masseleitung umgeladen wird, so daß an der Steuerelektrode 8b des Halbleiterschaltglieder 8 eine positive Spannung liegt, die dieses Schaltglied durchschalten läßt. Damit ist die Stromquelle 7 auf die Beleuchtungsanlage 2a;2b durchgeschaltet. Dabei kommt der Beleuchtunsanlage der volle Batteriestrom zugute, weil durch den Schalttransistor 5 und die Diode 6 kein Betteriestrom zum Dynamo 1 fließen kann.

Die Zeitschaltung, d.h. die automatische Abschaltung der Stromquelle 7 ergibt sich daraus, daß bei stehendem Dynamo beide Kondensatoren 9;10 nicht mehr geladen werden. Dies hat zur Folge, daß sich der große Kondensator 10 über den hochohmigen Widerstand 17 und die Verbindung zwischen der Steuerelektrode 8b und der Masseleitung 4 entlädt.

Dabei bleibt das Halbleiterschaltglied 8 solange durchgesteuert, bis die Spannung an seiner Steuerelektrode unter einen bestimmten, für dieses Halbleiterschaltglied charakteristischen Spannungswert fällt. Wird eine tiefere Spannung erreicht, so sperrt das Halbleiterschaltglied, so daß der Notstromkreis unterbrochen ist: die Stromquelle 7 ist abgeschaltet. Die Beleuchtungsanlage 2a;2b ist nunmehr völlig stromlos und dunkel.

Durch geeignete Wahl der Kondensatoren 9 und 10 kann die Zeitdauer der Versorgung der Beleuchtungsanlage 2a;2b mit dem Notstrom in weiten Grenzen frei bestimmt werden.

Es wird jedoch vorgeschlagen, diese Bauelemente derart zu dimensionieren, daß diese Zeit etwa 3 Minuten beträgt, die sich in der Praxis als guter Mittelwert erwiesen hat, bei dessen Ermittlung die Sicherheit im Verkehr einerseits und ein möglichst sparsamer Verbrauch der Stromquelle andererseits berücksichtigt werden müssen.

Die Rücksetzung der Zeitschaltung erfolgt unmittelbar sobald sich der Dynamo wieder dreht. Durch den Dynamo werden dann die Kondensatoren 9 und 10 sofort neu aufgeladen, so daß der Kondensator 9 mit seinem negativen Pol an der Steuerelektrode 8b liegt und das Halbleiterschaltglied sperrt. Außerdem wird aber auch der zweite Kondensator 10 wieder auf seine volle Spannung aufgeladen, so daß auch bei kurzen Fahren zwischen zwei Stops sofort wieder die volle Abschaltzeit zur Verfügung steht.

Die Verwendung einer Reihenschaltung aus gleichgerichteten Dioden 11 zur Aufladung des ersten Kondensators 9 bewirkt, daß bei Einschaltung der Stromquelle 7 der Strom aus dem großen, zweiten Kondensator 10 auch wirklich nur in die Steuerelektrode 8b fließt und nicht etwa über die Dioden 11 und den Dynamo 1 zurück zur Masse.

An sich würde zur Aufladung des Kondensators 9 eine einzige Diode ausreichen, aber deren Schwellenspannung wäre zu gering gegenüber der Schwellenspannung des Halbleiterschaltgliedes 8, und daher könnte tatsächlich der Strom aus dem Kondensator 10 über diese Diode abfließen. Bei der Hintereinanderschaltung dreier Dioden erhöht sich jedoch deren Schwellenspannung und wird größer als diejenige des Halbleiterschaltgliedes, so daß sichergestellt ist, daß aller Strom aus dem Kondensator auch wirklich zur Steuerelektrode fließt. Die gleiche Wirkung kann erzielt werden durch Hintereinanderschaltung einer einzelnen Diode und einer Zenerdiode.

Wie in der Beschreibungseinleitung bereits erwähnt, kann das Halbleiterschaltglied in unterschiedlichster Weise ausgebildet sein. Zum Beispiel wäre es denkbar, daß das Halbleiterschaltglied einen Transistor und einen Darlington-Transistor enthält. Es kann aber auch aus nur einem Darlington-Transistor mit hoher Verstärkung bestehen. Ferner wäre es möglich als Halbleiterschaltglied drei diskrete Transistoren zu verwenden; oder z.B. auch nur einen Leistungs-Feldeffekttransistor.

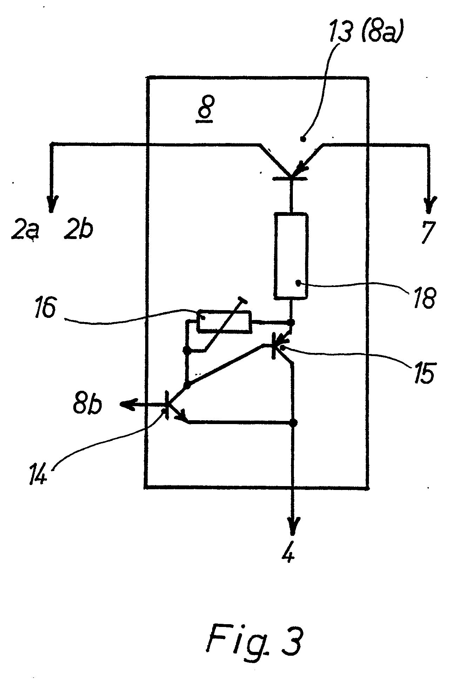

In der in Fig.3 nur beispielsweise gezeigten Ausführung eines Halbleiterschaltgliedes enthält letzeres einen Leistungstransistor 13, über dessen Emitter/Kollektor-Strecke der Strom zur Beleuchtunsanalage 2a;2b fließt.

Der Leistungstransistor 13 wird von einem Steuertransistor 14 geschaltet, dessen Kollektor mit der Basis des Transistors 13 verbunden ist. Diese Verbindung ist allerdings nicht eine direkte Verbindung, sondern in ihr liegt noch eine Stromverstärkerschaltung, die im vorliegenden Beispiel aus einem Transistor 15 sowie aus einem einstellbaren Widerstand 16 und einem Festwiderstand 18 besteht. Die Elemente 15;16;18 haben jedoch auf die eigentliche Funktion keinen Einfluß sondern dienen, wie gesagt, lediglich der Stromverstärkung.

Die Basis des Steuertransistors 14 wird direkt mit dem Potential des Kondensators 9 angesteuert, wobei sich die oben beschriebenen Schaltzustände und Funktionen ergeben.

In Fig.1 ist außerdem ein Schaltungszweig 20 eingezeichnet, der direkt vom Dynamo 1 zur Stromquelle 7 verläuft, und in dem eine Diode 21 liegt. Über diesen Zweig erfolgt die Aufladung der Stromquelle 7, wenn als solche Stromquelle ein Akkumulator verwendet wird. Wie bereits beschrieben verläuft während der Spannungsspitzen der Dynamospannung ein Ladestrom durch diesen Zweig und lädt den Akku wieder auf. Wird als Notstromquelle dagegen eine Batterie verwendet, so erfolgt zwar nur eine geringe Regenerierung der Batterie, aber der Ladestrom schadet jedenfalls der Batterie nicht, so daß auch mit einem solchen Ladezweig in der Schaltung wahlweise ein Akku oder eine Batterie als Stromquelle verwendet werden kann.

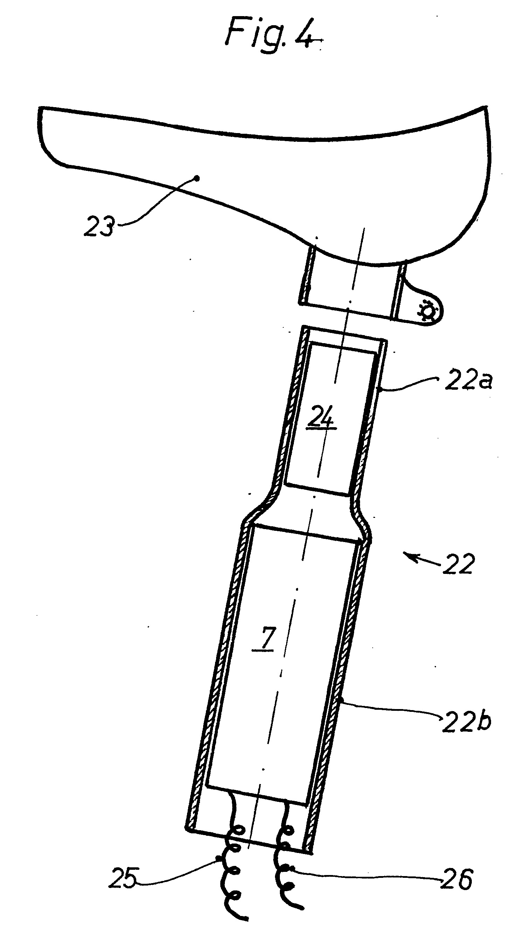

In Fig.4 ist die räumliche Unterbringung der Notstromschaltung bei einem Fahrrad gezeigt. In der Figur ist mit 22 das Sattelrohr des Fahrrades beziffert, auf das in bekannter Weise der Fahrradsattel 23 aufgesteckt und festgeklemmt wird. Das Rohr hat ein oberes Ende geringeren Durchmessers 22a, in dem die elektronischen Bauelemente 24 der Schaltung als Paket untergebracht sind. Im unteren Ende 22b mit größerem Durchmesser ist die Notstromquelle 7 untergebracht. Diese kann z.B. aus vier Babyzellen bestehen, es kann aber auch ein Akku mit den gleichen äußeren Abmessungen sein. Diese Quellen können wahlweise eingesetzt werden. Nach unten führen aus dem Rohr die elektrischen Anschlüsse 25 und 26 heraus.

Die Unterbringung der Notstromschaltung im Sattelrohr hat vor allem den Vorteil, daß die Schaltung relativ diebstahlsicher am Fahrrad angeordnet ist. Ferner ist ein Fahrrad auf diese Weise leicht mit einer Notstromschaltung nachrüstbar. Es braucht dazu lediglich das alte Sattelrohr gegen ein neues, mit der Notstromschaltung ausgerüstetes Sattelrohr ausgewechselt und die elektrischen Verbindungen zum Dynamo, Lampe und Rücklicht hergestellt zu werden.

0060512

A n s p r ü c h e

1.)  Notstromversorgungsschaltung für einen dynamogespeisten
     Verbraucher in Fahrzeugen, bei denen der Strom über einen
     Dynamo aus der Bewegungsenergie des Fahrzeuges gewonnen
     wird, insbesondere für die Beleuchtungsanlage an Fahrrädern und ähnlichen Fahrzeugen, bei denen die Beleuchtungsanlage an einen ersten Stromkreis, den Dynamostromkreis, und an einen zweiten Stromkreis, den Notstromkreis,
     angeschlossen ist, deren Massepotentiale untereinander
     verbunden sind, gekennzeichnet durch folgende Merkmale:

     a    der Notstromkreis verläuft in bekannter Weise
          über ein Halbleiterschaltglied (8);

     b    die Steuerelektrode (8b) des Halbleiterschaltgliedes
          (8) ist mit dem negativen Pol eines ersten Kondensators geringer Kapazität (9) verbunden, der bei
          Dynamobetrieb vom Dynamo in aufgeladenem Zustand
          gehalten wird und dabei das Halbleiterschaltglied (8)
          sperrt; und

     c    zu dem ersten Kondensator (9) ist ein zweiter Kondensator großer Kapazität (10) in der Polarität
          antiparallel geschaltet, der ebenfalls bei Dynamobetrieb vom Dynamo (1) in aufgeladenem Zustand
          gehalten wird, und der mit seinem Pluspol mit dem
          Minuspol des ersten Kondensators (9) über einen
          hochohmigen Widerstand (18) verbunden ist.

2.) Notstromversorgungsschaltung nach Anspruch 1,
dadurch gekennzeichnet, daß das Halbleiterschaltglied (8)
einen Transistor und einen Darlington-Transistor enthält.

3.) Notstromversorgungsschaltung nach Anspruch 1,
dadurch gekennzeichnet, daß das Halbleiterschaltglied (8)
aus nur einem Darlington-Transistor mit hoher Verstärkung
besteht.

4.) Notstromversorgungsschaltung nach Anspruch 1,
dadurch gekennzeichnet, daß das Halbleiterschaltglied (8)
aus drei diskreten Transistoren besteht.

5.) Notstromversorgungsschaltung nach Anspruch 1,
dadurch gekennzeichnet, daß das Halbleiterschaltglied (8)
aus nur einem Leistungs-Feldeffekttransistor besteht.

6.) Notstromversorgungsschaltung nach Anspruch 1,
dadurch gekennzeichnet, daß das Halbleiterschaltglied (8)
aus einem Leistungstransistor (13) besteht, über dessen
Emitter/Kollektor-Strecke der Notstromkreis verläuft,
sowie aus einem Steuertransistor (14), dessen Kollektor
mit der Basis des Leistungstransistors verbunden ist,
und dessen eigene Basis von dem Kondensator (9) angesteuert wird.

7.) Notstromversorgungsschaltung nach Anspruch 6,
dadurch gekennzeichnet, daß der Kollektor des Steuertransistors (14) mit der Basis des Leistungstransistors
(13) über eine Stromverstärkungsschaltung (15;16;18)
verbunden ist.

8.) Notstromversorgungsschaltung nach Anspruch 1,
dadurch gekennzeichnet, daß das Halbleiterschaltglied (8)
durch eine über einen Halbleiter angesteuertes Miniaturrelais ersetzt ist.

9.) Notstromversorgungsschaltung nach Anspruch 1,
dadurch gekennzeichnet, daß der erste Kondensator (9)
und der zweite Kondensator (10) vom Dynamo (1) über
entgegengesetzt gerichtete Dioden (11;12) gespeist werden.

10.) Notstromversorgungsschaltung nach Anspruch 1,
dadurch gekennzeichnet, daß der erste Kondensator (9)
über mehrere, einander nachgeschaltete Dioden (11)
mit dem Dynamo (1) verbunden ist.

11.) Notstromversorungsschaltung nach Anspruch 1,
dadurch gekennzeichnet, daß der erste Kondensator (9)
über eine Diode und eine Zener-Diode mit dem Dynamo (1)
verbunden ist.

12.) Notstromversorgungsschaltung nach Anspruch 1,
dadurch gekennzeichnet, daß in der Leitung (3) zwischen
dem Dynamo (1) und der Beleuchtungsanlage (2a;2b)
ein Transistor (5) und antiparallel dazu eine Diode (6)
geschaltet sind, über die der Dynamostrom in beiden
Halbwellen zur Beleuchtungsanlage läuft, die aber in
umgekehrter Richtung den Fluß des Batteriestromes zum
Dynamo (1) sperren und den Strom nur zur Beleuchtungsanlage durchlassen.

13.) Notstromversorgungsschaltung nach Anspruch 1,
dadurch gekennzeichnet, daß in der Leitung (3) zwischen
dem Dynamo 1 und der Beleuchtungsanlage (2a;2b) ein
Kondensator (30) eingesetzt ist, der die beiden Halbwellen
des Dynamostromes bei nur geringem Spannungsabfall zur
Beleuchtungsanlage (2a;2b) durchläßt, aber in umgekehrter
Richtung den Fluß des Batteriestromes zum Dynamo (1)
sperrt und den Strom nur zur Beleuchtungsanlage durchläßt.

14.) Notstromversorgungsschaltung nach Anspruch 1,
dadurch gekennzeichnet, daß als Stromquelle (7) des
Notstromkreises ein Akkumulator verwendet wird und die
Schaltung einen direkten Zweig (20) zwischen dem Dynamo
(1) und dem Akkumulator besitzt, in dem eine Diode (21)
liegt, über die die Spitzenspannung der einen Dynamohalbwelle zum Akkumulator verläuft.

0060512

15.) Notstromversorgungsschaltung nach den Ansprüchen 1 und 11, dadurch gekennzeichnet, daß die Schaltungselemente und die Notstromquelle in einem rohrförmigen Gehäuse untergebracht sind.

16.) Notstromversorgungsschaltung nach Anspruch 12, dadurch gekennzeichnet, daß in das rohrförmige Gehäuse als Notstromquelle wahlweise Batteriezellen oder ein Akkumulator einsetzbar ist.

17.) Notstromversorungsschaltung nach den Ansprüchen 12 und 13 zur Verwendung an einem Fahrrad, dadurch gekennzeichnet, daß das rohrförmige Gehäuse das Sattelrohr (22) des Fahrrades ist.

18.) Notstromversorgungsschaltung nach Anspruch 14, dadurch gekennzeichnet, daß das Sattelrohr (22) in an sich bekannter Weise im Durchmesser abgesetzt ist, und daß in dem im Durchmesser dünneren oberen Teil (22a) des Sattelrohres die elektronischen Schaltelemente untergebracht sind, während in dem unteren, dickeren Teil (22b) wahlweise die Batteriezellen oder der Akkumulator einsetzbar ist.

Fig.1

Fig. 2

Fig. 3

Fig.4

Europäisches
Patentamt

**EUROPÄISCHER RECHERCHENBERICHT**

0060512
Nummer der Anmeldung

EP 82 10 1927

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | EP-A-0 021 266 (ULO-WERK MORITZ ULLMANN) * Seite 3, Zeile 11 - Seite 6, Zeile 35; Figur * | 1,4,6, 8,9 | B 62 J 5/00 H 02 J 9/06 |
| A | ELEKTOR, Band 6, Nr. 7/8, Juli/August 1980, Seite 7-07, Canterbury, G.B. "Automatic cycle lighting" * Insgesamt * | 1,8,14 | |
| A | ELEKTOR, Band 6, Nr. 7/8, Juli/August 1980, Seite 7-38, Canterbury, G.B. "Security rear light" * Insgesamt * | 1,4,6 | |
| A | FR-A-1 588 771 (SOCIETE DES ACCUMULATEURS FIXES ET DE TRACTION) * Titel; Seite 3, linke Spalte, Zeilen 13-24; Figur 2 * | 3 | **RECHERCHIERTE SACHGEBIETE (Int. Cl. ³)** B 62 J 5/00 H 02 J 7/00 H 02 J 9/00 |
| A | EP-A-0 019 222 (MOSTEK CORP.) * Seite 5, Zeile 14 - Seite 6, Zeile 7; Figur * | 5 | |
| A | FR-A- 920 006 (PHILIPS' GLOEILAMPENFABRIEKEN) * Seite 2, rechte Spalte, Zeilen 67-76; Figur 1 * | 13 | |

./.

Der vorliegende Recherchenbericht wurde für alle Patentansprüche erstellt.

| Recherchenort DEN HAAG | Abschlußdatum der Recherche 07-06-1982 | Prüfer POINT A.G.F. |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-2 409 906 (M.P. GONZALES) <br> * Seite 3, Zeile 34 - Seite 4, Zeile 36; Figuren 1,2 * <br><br> ----- | 15-17 | |
| | | | RECHERCHIERTE SACHGEBIETE (Int. Cl. ³) |

Der vorliegende Recherchenbericht wurde für alle Patentansprüche erstellt.

| Recherchenort | Abschlußdatum der Recherche | Prüfer |
|---|---|---|
| DEN HAAG | 07-06-1982 | POINT A.G.F. |